# EUROPEAN PATENT SPECIFICATION

(11) **EP 2 274 389 B1**
(45) Date of publication and mention of the grant of the patent: **24.08.2011**
(21) Application number: 09735153.0
(22) Date of filing: 17.04.2009
(51) Int. Cl.: C09D 133/00, C09D 171/02, C08L 33/00, C08L 71/02

(54) **COATING COMPOSITION CONTAINING POLYTRIMETHYLENE ETHER DIOL**
BESCHICHTUNGSZUSAMMENSETZUNG MIT POLYTRIMETHYLENETHERDIOL
COMPOSITION DE REVÊTEMENT CONTENANT DU DIOL D ÉTHER DE POLYTRIMÉTHYLÈNE

(30) Priority: 22.04.2008 US 125074
(43) Date of publication of application: 19.01.2011
(73) Proprietor: E. I. du Pont de Nemours and Company, Wilmington, DE 19898 (US)
(72) Inventor: YOKOYAMA, Ayumu, Clarkston MI 48346 (US); SORMANI, Patricia, Mary Ellen, Newark DE 19702 (US); MA, Sheau-Hwa, West Chester PA 19382 (US); ADAMS, James, Lamonte, Glenside PA 19038 (US)
(74) Representative: DuPont Performance Coatings Biering/Blum/Kimpel
(86) International application number: PCT/US2009/040923
(87) International publication number: WO 2009/131907

(56) References cited:
- US-A1- 2004 185 263
- US-A1- 2004 249 061

## Description

### FIELD OF DISCLOSURE

The present disclosure is directed to a coating composition having excellent adhesion to substrates, especially to the substrates having at least one existing coating layer. This disclosure is further directed to a coating composition comprising components derived from renewable resources.

### BACKGROUND OF DISCLOSURE

A typical coating finish over a substrate comprises some or all of the following layers: (1) one or more primer layers that provide adhesion and basic protection, such as corrosion protection; (2) one or more colored layers, typically pigmented, that provide most of the protection, durability and color; and (3) one or more clearcoat layers that provide additional durability and improved appearance. A colored topcoat layer can be used in place of the colored layer and clearcoat layer. A suitable primer, primer surfacer or primer filler, collectively referred to as "primer" herein, can be applied over the substrate to form the primer layer.

Epoxy primer is one of the primers that are commonly used in the industry for direct-to-metal coating applications that apply coatings directly onto metal substrates, such as vehicle bodies or body parts, steel tanks, pipelines, or other industrial structures. The colored layers plus clearcoat layers, or a single colored topcoat layer are commonly used to provide additional durability and appearance for these direct-to-metal coating applications. Adhesion between the primer layer, especially the epoxy primer layer and the colored layer is a challenge in the industry.

### STATEMENT OF DISCLOSURE

This disclosure is directed to a coating composition comprising a film forming binder, said binder consisting essentially of:
A) an acrylic polymer having one or more crosslinkable functional groups and having a glass transition temperature (Tg) of in a range of from -40°C to 5°C;
B) a polytrimethylene ether diol having a Mn (number average molecular weight) in a range of from 500 to 10,000; and
C) a crosslinking component containing at least one crosslinking agent having one or more crosslinking functional groups.

This disclosure is also directed to a process for coating a substrate having at least one existing coating layer thereon, said process comprising the steps of:
(A) applying a coating composition over said existing coating layer to form an overlay coating layer, wherein said coating composition comprises a film forming binder consisting essentially of:
   (i) an acrylic polymer having one or more crosslinkable functional groups and having a glass transition temperature (Tg) of in a range of from -40°C to 5°C;
   (ii) a polytrimethylene ether diol having a Mn (number average molecular weight) in a range of from 500 to 10,000; and
   (iii) a crosslinking component containing at least one crosslinking agent having one or more crosslinking functional groups; and
(B) curing said overlay coating layer to form an overlay coating on said substrate.

### DETAILED DESCRIPTION

The features and advantages of the present disclosure will be more readily understood, by those of ordinary skill in the art, from reading the following detailed description. It is to be appreciated that certain features of the disclosure, which are, for clarity, described above and below in the context of separate embodiments, may also be provided in combination in a single embodiment. Conversely, various features of the disclosure that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both proceeded by the word "about." In this manner, slight variations above and below the stated ranges can be used to achieve substantially the same results as values within the ranges. Also, the disclosure of these ranges is intended as a continuous range including every value between the minimum and maximum values.

As used herein:

The term "(meth)acrylate" means methacrylate or acrylate.

The term "two-pack coating composition", also known as 2K coating composition, refers to a coating composition having two packages that are stored in separate containers and sealed to increase the shelf life of the coating composition during storage. The two packages are mixed just prior to use to form a pot mix, which has a limited pot life, typically ranging from a few minutes (15 minutes to 45 minutes) to a few hours (4 hours to 8 hours). The pot mix is then applied as a layer of a desired thickness on a substrate surface, such as an automobile body. After application, the layer dries and cures at ambient or at elevated temperatures to form a coating on the substrate surface having desired coating properties, such as, high gloss, mar-resistance and resistance to environmental etching.

The term "crosslinkable component" refers to a component having "crosslinkable functional groups" that are functional groups positioned in each molecule of the compounds, oligomer, polymer, the backbone of the polymer, pendant from the backbone of the polymer, terminally positioned on the backbone of the polymer, or a combination thereof, wherein these functional groups are capable of crosslinking with crosslinking functional groups (during the curing step) to produce a coating in the form of crosslinked structures. One of ordinary skill in the art would recognize that certain crosslinkable functional group combinations would be excluded, since, if present, these combinations would crosslink among themselves (self-crosslink), thereby destroying their ability to crosslink with the crosslinking functional groups. A workable combination of crosslinkable functional groups refers to the combinations of crosslinkable functional groups that can be used in coating applications excluding those combinations that would self-crosslink.

Typical crosslinkable functional groups can include hydroxyl, thiol, isocyanate, thioisocyanate, acid or polyacid, acetoacetoxy, carboxyl, primary amine, secondary amine, epoxy, anhydride, ketimine, aldimine, or a workable combination thereof. Some other functional groups such as orthoester, orthocarbonate, or cyclic amide that can generate hydroxyl or amine groups once the ring structure is opened can also be suitable as crosslinkable functional groups.

The term "crosslinking component" refers to a component having "crosslinking functional groups" that are functional groups positioned in each molecule of the compounds, oligomer, polymer, the backbone of the polymer, pendant from the backbone of the polymer, terminally positioned on the backbone of the polymer, or a combination thereof, wherein these functional groups are capable of crosslinking with the crosslinkable functional groups (during the curing step) to produce a coating in the form of crosslinked structures. One of ordinary skill in the art would recognize that certain crosslinking functional group combinations would be excluded, since, if present, these combinations would crosslink among themselves (self-crosslink), thereby destroying their ability to crosslink with the crosslinkable functional groups. A workable combination of crosslinking functional groups refers to the combinations of crosslinking functional groups that can be used in coating applications excluding those combinations that would self-crosslink. One of ordinary skill in the art would recognize that certain combinations of crosslinking functional group and crosslinkable functional groups would be excluded, since they would fail to crosslink and produce the film forming crosslinked structures. The crosslinking component can comprise one or more crosslinking agents that have the crosslinking functional groups.

Typical crosslinking functional groups can include hydroxyl, thiol, isocyanate, thioisocyanate, acid or polyacid, acetoacetoxy, carboxyl, primary amine, secondary amine, epoxy, anhydride, ketimine, aldimine, orthoester, orthocarbonate, cyclic amide or a workable combination thereof.

It would be clear to one of ordinary skill in the art that certain crosslinking functional groups crosslink with certain crosslinkable functional groups. Examples of paired combinations of crosslinkable and crosslinking functional groups can include: (1) ketimine functional groups generally crosslink with acetoacetoxy, epoxy, or anhydride functional groups; (2) isocyanate, thioisocyanate and melamine functional groups generally crosslink with hydroxyl, thiol, primary and secondary amine, ketimine, or aldimine functional groups; (3) epoxy functional groups generally crosslink with carboxyl, primary and secondary amine, ketimine, or anhydride functional groups; (4) amine functional groups generally crosslink with acetoacetoxy functional groups; (5) polyacid functional groups generally crosslink with epoxy or isocyanate functional groups; (6) anhydride functional groups generally crosslink with epoxy and ketimine functional groups; and (7) hydroxyl functional groups also crosslink with acetoacetoxy functional groups.

The term "binder" as used herein refers to film forming constituents of a coating composition. Typically, a binder can comprise a crosslinkable component and a crosslinking component in that the crosslinkable component can react with the crosslinking component to form crosslinked structures, such as coating films. The binder in this disclosure can further comprise other polymers that are essential for forming the crosslinked films having desired properties. Additional components, such as solvents, pigments, catalysts, rheology modifiers, antioxidants, UV stabilizers and absorbers, leveling agents, antifoaming agents, anti-cratering agents, or other conventional additives are not included in the term. One or more of those additional components can be included in the coating composition.

A substrate suitable for this invention can be a plastic, bare metal such as blasted steel, aluminum or other metal or alloys. One example of the blasted steel can be the one available from East Coast Steel Inc, Columbia, SC 29290, USA. The substrate can also be plastic or metal substrates with one or more existing coating layers. One example can be a steel substrate coated with an eletrocoat (e-coat) layer. Another example can be a steel substrate coated with an eletrocoat (e-coat) layer and a primer layer. Yet another example can be a steel substrate coated with a primer layer. Yet another example can be a steel substrate coated with a primer layer and a colored coating layer. The primer layer can be produced with an epoxy primer, an acrylic primer, a polyester primer, or other primers known to those skilled in the art. An epoxy primer means a primer composition comprises at least one epoxy resin or its derivatives. An acrylic primer means a primer composition comprises at least one acrylic resin or its derivatives. A polyester primer means a primer composition comprises polyesters or polyester derivatives.

The coating composition of this disclosure comprises a film forming binder, herein referred to as the binder. Said binder can comprise:
A) an acrylic polymer having one or more crosslinkable functional groups and having a glass transition temperature (Tg) in a range of from - 40°C to 5°C;
B) a polytrimethylene ether diol having a Mn (number average molecular weight) in a range of from 500 to 10,000; and
C) a crosslinking component containing at least one crosslinking agent having one or more crosslinking functional groups.

In one example, the binder of the coating composition of this disclosure, besides solvents, can consist essentially of:
A) an acrylic polymer having one or more crosslinkable functional groups and having a glass transition temperature (Tg) in a range of from -40°C to 5°C;
B) a polytrimethylene ether diol having a Mn (number average molecular weight) in a range of from 500 to 10,000; and
C) a crosslinking component containing at least one crosslinking agent having one or more crosslinking functional groups.

The binder can contain: (a) in a range of from 10% to 80% by weight in one example, 20% to 70% by weight in another example, of the acrylic polymer; (b) in a range of from 1 % to 50% by weight in one example, 1 % to 30% by weight in another example, of the polytrimethylene ether diol and (c) in a range of from 10% to 50% by weight in one example and 10% to 45% by weight in another example of the crosslinking agent. All weight percentages are based on the total weight of the binder composition. In one embodiment, the coating composition of this disclosure has a molar ratio of NCO:OH in a range of from 0.8:1.0 to 1.5:1.0. In another embodiment, the molar ratio of NCO:OH can be in a range of from 0.9:1.0 to 1.1:1.0.

The acrylic polymer used in the composition can have a weight average molecular weight (Mw) of about 2,000 to 100,000, and a glass transition temperature (Tg) in a range of from -40°C to 10°C in one embodiment, -40°C to 5°C in another embodiment, -40°C to 3°C in yet another embodiment, and contain functional groups or pendant moieties that are reactive with isocyanate or other crosslinking functional groups, such as, for example, hydroxyl, amino, amide, glycidyl, silane and carboxyl groups. The Tg of the acrylic polymer can be measured empirically or calculated according to the Fox Equation. These acrylic polymers can be straight chain polymers, branched polymers, block copolymers, graft polymers, graft terpolymers or core shell polymers.

In one example, the acrylic polymer can have a weight average molecular weight in a range of from 5,000 to 50,000. In another example, the acrylic polymer can have a weight average molecular weight in a range of from 5,000 to 25,000. Typical example of useful acrylic polymers can be polymerized from a plurality of monomers, such as acrylates, methacrylates or derivatives thereof.

Suitable monomers can include linear alkyl (meth)acrylates having 1 to 12 carbon atoms in the alkyl group, cyclic or branched alkyl (meth)acrylates having 3 to 12 carbon atoms in the alkyl group, including isobornyl (meth)acrylate, styrene, alpha methyl styrene, vinyl toluene, (meth)acrylonitrile, (meth)acryl amides and monomers that provide crosslinkable functional groups, such as, hydroxy alkyl (meth)acrylates having 1 to 4 carbon atoms in the alkyl group, glycidyl (meth)acrylate, amino alkyl (meth)acrylates having 1 to 4 carbon atoms in the alkyl group, (meth)acrylic acid, and alkoxy silyl alkyl (meth)acrylates, such as, trimethoxysilylpropyl (meth)acrylate.

Suitable monomers can also include, for example, hydroxyalkyl esters of alpha,beta-olefinically unsaturated monocarboxylic acids with primary or secondary hydroxyl groups. These may, for example, comprise the hydroxyalkyl esters of acrylic acid, methacrylic acid, crotonic acid and/or isocrotonic acid. Examples of suitable hydroxyalkyl esters of alpha,beta-olefinically unsaturated monocarboxylic acids with primary hydroxyl groups can include hydroxyethyl (meth)acrylate, hydroxypropyl (meth)acrylate, hydroxybutyl (meth)acrylate, hydroxyamyl (meth)acrylate, hydroxyhexyl (meth)acrylate. Examples of suitable hydroxyalkyl esters with secondary hydroxyl groups can include 2-hydroxypropyl (meth)acrylate, 2-hydroxybutyl (meth)acrylate, 3-hydroxybutyl (meth)acrylate. Low Tg monomers, such as hydroxyl functional monomers, such as 2-hydroxyethyl acrylate (Tg: -15°C) and hydroxypropyl acylate (Tg: -7°C) can be useful in decreasing Tg of the acrylic polymer and providing the crosslinkable functional groups.

Suitable monomers can also include monomers that are reaction products of alpha,beta-unsaturated monocarboxylic acids with glycidyl esters of saturated monocarboxylic acids branched in alpha position, for example with glycidyl esters of saturated alpha-alkylalkanemonocarboxylic acids or alpha,alpha'-dialkylalkanemonocarboxylic acids. These can comprise the reaction products of (meth)acrylic acid with glycidyl esters of saturated alpha,alpha-dialkylalkanemonocarboxylic acids with 7 to 13 carbon atoms per molecule, particularly preferably with 9 to 11 carbon atoms per molecule. These reaction products can be formed before, during or after copolymerization reaction of the acrylic polymer.

Suitable monomers can further include monomers that are reaction products of hydroxyalkyl (meth)acrylates with lactones. Hydroxyalkyl (meth)acrylates which can be used include, for example, those stated above. Suitable lactones can include, for example, those that have 3 to 9 carbon atoms in the ring, wherein the rings can also comprise different substituents. Examples of lactones can include gamma-butyrolactone, delta-valerolactone, epsilon-caprolactone, beta-hydroxy-beta-methyl-delta-valerolactone, lambda-laurolactone or a mixture thereof. In one example, the reaction products can comprise those prepared from 1 mole of a hydroxyalkyl ester of an alpha,beta-unsaturated monocarboxylic acid and 1 to 5 moles, preferably on average 2 moles, of a lactone. The hydroxyl groups of the hydroxyalkyl esters can be modified with the lactone before, during or after the copolymerization reaction.

Suitable monomers can also include unsaturated monomers such as, for example, allyl glycidyl ether, 3,4-epoxy-1-vinylcyclohexane, epoxycyclohexyl (meth)acrylate, vinyl glycidyl ether and glycidyl (meth)acrylate, that can be used to provide the acrylic polymer with glycidyl groups. In one example, glycidyl (meth)acrylate can be used.

Suitable monomers can also include monomers that are free-radically polymerizable, olefinically unsaturated monomers which, apart from at least one olefinic double bond, do not contain additional functional groups. Such monomers include, for example, esters of olefinically unsaturated carboxylic acids with aliphatic monohydric branched or unbranched as well as cyclic alcohols with 1 to 20 carbon atoms. Examples of the unsaturated carboxylic acids can include acrylic acid, methacrylic acid, crotonic acid and isocrotonic acid. In one embodiment, esters of (meth)acrylic acid can be used. Examples of esters of (meth)acrylic acid can include methyl acrylate, ethyl acrylate, isopropyl acrylate, tert.-butyl acrylate, n-butyl acrylate, isobutyl acrylate, 2-ethylhexyl acrylate, lauryl acrylate, stearyl acrylate and the corresponding methacrylates. Examples of esters of (meth)acrylic acid with cyclic alcohols can include cyclohexyl acrylate, trimethylcyclohexyl acrylate, 4-tert.-butylcyclohexyl acrylate, isobornyl acrylate and the corresponding methacrylates. Particularly, monomers having inherent low Tg properties are suitable for deriving the low Tg acrylic polymers of this disclosure. Examples of low Tg monomers include butyl acrylate (-54°C), 2-ethylhexyl acrylate (-50°C), ethyl acrylate (-24°C), isobutyl acrylate (-24°C), 2-ethylhexyl methacrylate (-10°C), and some of the reaction products of long linear or branched alcohols with the olefinically unsaturated monocarboxylic acids. The abovementioned Tg values are derived from literatures and are commonly accepted in the industry. Theoretical Tgs of the acrylic polymers can be predicted using the Fox equation based on Tgs of the monomers. Actual Tg's of the finished polymers can be measured by DSC (Differential Scanning Calorimetry, also available as ASTM D3418 / E1356).

Suitable monomers can also include unsaturated monomers that do not contain additional functional groups for example, vinyl ethers, such as, isobutyl vinyl ether and vinyl esters, such as, vinyl acetate, vinyl propionate, vinyl aromatic hydrocarbons, preferably those with 8 to 9 carbon atoms per molecule. Examples of such monomers can include styrene, alphamethylstyrene, chlorostyrenes, 2,5-dimethylstyrene, p-methoxystyrene, vinyl toluene. In one embodiment, styrene can be used.

Suitable monomers can also include small proportions of olefinically polyunsaturated monomers. These olefinically polyunsaturated monomers are monomers having at least 2 free-radically polymerizable double bonds per molecule. Examples of these olefinically polyunsaturated monomers can include divinylbenzene, 1,4-butanediol diacrylate, 1,6-hexanediol diacrylate, neopentyl glycol dimethacrylate, and glycerol dimethacrylate.

The acrylic polymers of this disclosure can generally be polymerized by free-radical copolymerization using conventional processes well known to those skilled in the art, for example, bulk, solution or bead polymerization, in particular by free-radical solution polymerization using free-radical initiators.

The acrylic polymer can contain (meth)acrylamides. Typical examples of such acrylic polymers can be polymerized from monomers including (meth)acrylamide. In one example, such acrylic polymer can be polymerized from (meth)acrylamide and alkyl (meth)acrylates, hydroxy alkyl (meth)acrylates, (meth)acrylic acid and one of the aforementioned olefinically unsaturated monomers.

The polytrimethylene ether diol suitable for the coating composition of this disclosure can have a number average molecular weight (Mn) in the range of from 500 to 10,000, preferably 500 to 8,000, even preferably 500 to 4,000. The polytrimethylene ether diol has a Tg of about -75°C, a polydispersity in the range of from 1.1 to 2.1 and a hydroxyl number in the range of from 20 to 200.

Suitable polytrimethylene ether diol can be prepared by an acidcatalyzed polycondensation of 1,3-propanediol, such as described in U.S. Patent Nos. 6,977,291 and 6,720,459. The polytrimethylene ether diol can also be prepared by a ring opening polymerization of a cyclic ether, oxetane, such as described in J. Polymer Sci., Polymer Chemistry Ed. 28, 449 to 444 (1985). The polycondensation of 1,3-propanediol is preferred over the use of oxetane since the diol is a less hazardous, stable, low cost, commercially available material and can be prepared by use of petro chemical feed-stocks or renewable resources.

A bio-route via fermentation of a renewable resource can be used to obtain the 1,3-propanediol. One example of renewable resources is corn since it is readily available and has a high rate of conversion to 1,3-propanediol and can be genetically modified to improve yields to the 1,3-propanediol. Examples of typical bio-route can include those described in US Patent No. 5, 686,276, US Patent No. 5,633,362 and US Patent No. 5,821,092.

Copolymers of polytrimethylene ether diol also can be suitable for the coating composition of this disclosure. Examples of such suitable copolymers of polytrimethylene ether diol can be prepared by copolymerizing 1,3-propanediol with another diol, such as, ethane diol, hexane diol, 2-methyl-1,3-propanediol, 2,2-dimethyl-1,3-propanediol, trimethylol propane and pentaerythritol. In one example, the copolymers of polytrimethylene ether diol can be polymerized from monomers have 1,3-propanediol in a range of from 50% to 99%. In another example, the copolymers ofpolytrimethylene ether diol can be polymerized from monomers have 1,3-propanediol in a range of from 60% to 99%. In yet another example, the copolymers of polytrimethylene ether diol can be polymerized from monomers have 1,3-propanediol in a range of from 70% to 99%.

A blend of a high and a low molecular weight polytrimethylene ether diol can be used. In one example, the high molecular weight polytrimethylene ether diol can have an Mn in a range of from 1,000 to 4,000 and the low molecular weight polytrimethylene ether diol can have an Mn in a range of from 150 to 500. The average Mn of the blended polytrimethylene ether diol can be in a range of from 500 to 4,000. In another example, the high molecular weight polytrimethylene ether diol can have an Mn in a range of from 1,000 to 4,000 and the low molecular weight polytrimethylene ether diol can have an Mn in a range of from 150 to 500 and the average Mn of the blend can be in a range of from 500 to 3,000.

Blends of the polytrimethylene ether diol and other cycloaliphatic hydroxyl containing either branched or linear oligomers can be used. Such hydroxyl containing oligomers are known to those skilled in the art. Examples of such hydroxyl containing oligomers can include those disclosed by Barsotti, et al. in US Patent No. 6,221,494.

The crosslinking agents that are suitable for the coating composition of this disclosure include compounds having crosslinking functional groups. Examples of such compounds can be organic polyisocyanates. Examples of organic polyisocyanates include aliphatic polyisocyanates, cycloaliphatic polyisocyanates, aromatic polyisocyanates and isocyanate adducts.

Examples of suitable aliphatic, cycloaliphatic and aromatic polyisocyanates that can be used include the following: 2,4-toluene diisocyanate, 2,6-toluene diisocyanate ("TDI"), 4,4-diphenylmethane diisocyanate ("MDI"), 4,4'-dicyclohexyl methane diisocyanate ("H12MDI"), 3,3'-dimethyl-4,4'-biphenyl diisocyanate ("TODI"), 1,4-benzene diisocyanate, trans-cyclohexane-1,4-diisocyanate, 1,5-naphthalene diisocyanate ("NDI"), 1,6-hexamethylene diisocyanate ("HDI"), 4,6-xylene diisocyanate, isophorone diisocyanate,("IPDI"), other aliphatic or cycloaliphatic di-, tri- or tetraisocyanates, such as, 1,2-propylene diisocyanate, tetramethylene diisocyanate, 2,3-butylene diisocyanate, octamethylene diisocyanate, 2,2,4-trimethyl hexamethylene diisocyanate, dodecamethylene diisocyanate, omega-dipropyl ether diisocyanate, 1,3-cyclopentane diisocyanate, 1,2-cyclohexane diisocyanate, 1,4-cyclohexane diisocyanate, 4-methyl-1,3-diisocyanatocyclohexane, dicyclohexylmethane-4,4'-diisocyanate, 3,3'-dimethyl-dicyclohexylmethane 4,4'-diisocyanate, polyisocyanates having isocyanurate structural units, such as, the isocyanurate of hexamethylene diisocyanate and the isocyanurate of isophorone diisocyanate, the adduct of 2 molecules of a diisocyanate, such as, hexamethylene diisocyanate, uretidiones of hexamethylene diisocyanate, uretidiones of isophorone diisocyanate and a diol, such as, ethylene glycol, the adduct of 3 molecules of hexamethylene diisocyanate and 1 molecule of water, allophanates, trimers and biurets, for example, of hexamethylene diisocyanate, allophanates, trimers and biurets, for example, of isophorone diisocyanate and the isocyanurate of hexane diisocyanate. MDI, HDI, TDI and isophorone diisocyanate are preferred because of their commercial availability.

Tri-functional isocyanates also can be used, such as, triphenyl methane triisocyanate, 1,3,5-benzene triisocyanate, 2,4,6-toluene triisocyanate. Trimers of diisocyanates, such as, the trimer of hexamethylene diisocyanate, sold as Tolonate® HDT from Rhodia Corporation and the trimer of isophorone diisocyanate are also suitable.

An isocyanate functional adduct can be used, such as, an adduct of an aliphatic polyisocyanate and a polyol or an adduct of an aliphatic polyisocyanate and an amine. Also, any of the aforementioned polyisocyanates can be used with a polyol to form an adduct. Polyols, such as, trimethylol alkanes, particularly, trimethylol propane or ethane can be used to form an adduct.

The coating composition of this disclosure can contain in a range of from 1% to 50% by weight in one embodiment, in a range of from 10% to 40% by weight in another embodiment, in a range of from 20% to 40% by weight in yet another embodiment, based on the weight of the binder, of acrylic NAD (non-aqueous dispersed) resins. These NAD resins typically can include high molecular weight resins having a crosslinked acrylic core with a Tg between 20 to 100°C and attached to the core are low Tg stabilizer segments. Examples of such NAD resins can include those disclosed in US Patent Nos. 4,591,533, 5,010,140 and 5,763,528.

Typically, a catalyst can be used in the coating composition of this disclosure to reduce curing time and to allow curing of the coating composition at ambient temperatures. The ambient temperatures are typically referred to as temperatures in a range of from range of 18°C to 35°C. Typical catalysts include dibutyl tin dilaurate, dibutyl tin diacetate, dibutyl tin dichloride, dibutyl tin dibromide, triphenyl boron, tetraisopropyl titanate, triethanolamine titanate chelate, dibutyl tin dioxide, dibutyl tin dioctoate, tin octoate, aluminum titanate, aluminum chelates, zirconium chelate, hydrocarbon phosphonium halides, such as, ethyl triphenyl phosphonium iodide and other such phosphonium salts, and other catalysts or mixtures thereof known to those skilled in the art.

The coating composition of this disclosure can comprise one or more solvents. Typically the coating composition can comprise up to 95% by weight, based on the weight of the coating composition, of one or more solvents. Typically, the coating composition of this disclosure can have a solid content in a range of from 20% to 80% by weight in one example, in a range of from 50% to 80% by weight in another example and in a range of from 60% to 80% by weight in yet another example, all based on the total weight of the coating composition. The coating composition of this disclosure can also be formulated at 100 % solids by using a low molecular weight acrylic resin reactive diluent.

Any typical organic solvents can be used to form the coating composition of this disclosure. Examples of solvents include, but not limited to, aromatic hydrocarbons, such as, toluene, xylene; ketones, such as, acetone, methyl ethyl ketone, methyl isobutyl ketone, methyl amyl ketone and diisobutyl ketone; esters, such as, ethyl acetate, n-butyl acetate, isobutyl acetate and a combination thereof.

Typically, when the coating composition of this disclosure is utilized as a pigmented coating composition, it contains pigments in a pigment to binder weight ratio of 1/100 to 350/100. The coating composition can be used as a basecoat or topcoat, such as a colored topcoat. Conventional inorganic and organic colored pigments, metallic flakes and powders, such as, aluminum flake and aluminum powders; special effects pigments, such as, coated mica flakes, coated aluminum flakes colored pigments, a combination thereof can be used. Transparent pigments or pigments having the same refractive index as the cured binder can also be used. Such transparent pigments can be used in a pigment to binder weight ratio of 0.1/100 to 5/100. One example of such transparent pigment is silica.

The coating composition of this disclosure can also comprise one or more ultraviolet light stabilizers in the amount of 0.1 % to 10% by weight, based on the weight of the binder. Examples of such ultraviolet light stabilizers can include ultraviolet light absorbers, screeners, quenchers, and hindered amine light stabilizers. An antioxidant can also be added to the coating composition, in the amount of about 0.1% to 5% by weight, based on the weight of the binder.

Typical ultraviolet light stabilizers that are suitable for this disclosure can include benzophenones, triazoles, triazines, benzoates, hindered amines and mixtures thereof. A blend of hindered amine light stabilizers, such as Tinuvin® 328 and Tinuvin®123, all commercially available from Ciba Specialty Chemicals, Tarrytown, New York, under respective registered trademark, can be used.

Typical ultraviolet light absorbers that are suitable for this disclosure can include hydroxyphenyl benzotriazoles, such as, 2-(2-hydroxy-5-methylphenyl)-2H-benzotrazole, 2-(2-hydroxy-3,5-di-tert.amyl-phenyl)-2H-benzotriazole, 2[2-hydroxy-3,5-di(1,1-dimethylbenzyl)phenyl]-2H-benzotriazole, reaction product of 2-(2-hydroxy-3-tert.butyl-5-methyl propionate)-2H-benzotriazole and polyethylene ether glycol having a weight average molecular weight of 300, 2-(2-hydroxy-3-tert.butyl-5-iso-octyl propionate)-2H-benzotriazole; hydroxyphenyl s-triazines, such as, 2-[4((2,-hydroxy-3-dodecyloxy/tridecyloxypropyl)-oxy)-2-hydroxyphenyl]-4,6-bis(2,4-dimethylphenyl)-1,3,5-triazine, 2-[4(2-hydroxy-3-(2-ethylhexyl)-oxy)-2-hydroxyphenyl]-4,6-bis(2,4-dimethylphenyl)1,3,5-triazine, 2-(4-octyloxy-2-hydroxyphenyl)-4,6-bis(2,4-dimethylphenyl)-1,3,5-triazine; hydroxybenzophenone U.V. absorbers, such as, 2,4-dihydroxybenzophenone, 2-hydroxy-4-octyloxybenzophenone, and 2-hydroxy-4-dodecyloxybenzophenone.

Typical antioxidants that are suitable for this disclosure can include tetrakis[methylene(3,5-di-tert-butylhydroxy hydrocinnamate)]methane, octadecyl 3,5-di-tert-butyl-4-hydroxyhydrocinnamate, tris(2,4-di-tert-butylphenyl) phosphite, 1,3,5-tris(3,5-di-tert-butyl-4-hydroxybenzyl)-1,3,5-triazine-2,4,6(1H,3H,5H)-trione and benzenepropanoic acid, 3,5-bis(1,1-dimethyl-ethyl)-4-hydroxy-C7-C9 branched alkyl esters. Typically useful antioxidants can also include hydroperoxide decomposers, such as Sanko® HCA (9,10-dihydro-9-oxa-10-phosphenanthrene-10-oxide), triphenyl phosphate and other organo-phosphorous compounds, such as, Irgafos® TNPP from Ciba Specialty Chemicals, Irgafos® 168, from Ciba Specialty Chemicals, Ultranox® 626 from GE Specialty Chemicals, Mark PEP-6 from Asahi Denka, Mark HP-10 from Asahi Denka, Irgafos® P-EPQ from Ciba Specialty Chemicals, Ethanox 398 from Albemarle, Weston 618 from GE Specialty Chemicals, Irgafos® 12 from Ciba Specialty Chemicals, Irgafos® 38 from Ciba Specialty Chemicals, Ultranox® 641 from GE Specialty Chemicals and Doverphos® S-9228 from Dover Chemicals.

Typical hindered amine light stabilizers can include N-(1,2,2,6,6-pentamethyl-4-piperidinyl)-2-dodecyl succinimide, N(1acetyl-2,2,6,6-tetramethyl-4-piperidinyl)-2-dodecyl succinimide, N-(2hydroxyethyl)-2,6,6,6-tetramethylpiperidine-4-ol-succinic acid copolymer, 1,3,5 triazine-2,4,6-triamine, N,N"'-[1,2-ethanediybis[[[4,6-bis[butyl(1,2,2,6,6-pentamethyl-4-piperidinyl)amino]-1,3,5-triazine-2-yl]imino]-3,1-propanediyl]]bis[N, N"'-dibutyl-N',N"'-bis(1,2,2,6,6-pentamethyl-4-piperidinyl)], poly-[[6-[1,1,3,3-tetramethylbutyl)-amino]-1,3,5-trianzine-2,4-diyl][2,2,6,6-tetramethylpiperidinyl)-imino]-1,6-hexane-diyl[(2,2,6,6-tetramethyl-4-piperidinyl)-imino]), bis(2,2,6,6-tetramethyl-4-piperidinyl)sebacate, bis(1,2,2,6,6-pentamethyl-4-piperidinyl)sebacate, bis(1-octyloxy-2,2,6,6-tetramethyl-4-piperidinyl)sebacate, bis(1,2,2,6,6-pentamethyl-4-piperidinyl)[3,5bis(1,1-dimethylethyl-4-hydroxy-phenyl)methyl]butyl propanedioate, 8-acetyl-3-dodecyl-7,7,9,9,-tetramethyl-1 ,3,8-triazaspiro(4,5)decane-2,4-dione, and dodecyl/tetradecyl-3-(2,2,4,4-tetramethyl-2I-oxo-7-oxa-3,20-diazal dispiro(5.1.11.2)henicosan-20-yl)propionate.

The coating compositions of this disclosure can comprise conventional coating additives. Examples of such additives can include wetting agents, leveling and flow control agents, for example, Resiflow®S (polybutylacrylate), BYK® 320 and 325 (high molecular weight polyacrylates), BYK® 347 (polyether-modified siloxane) under respective registered tradmarks, leveling agents based on (meth)acrylic homopolymers; rheological control agents, such as highly disperse silica, fumed silica or polymeric urea compounds; thickeners, such as partially crosslinked polycarboxylic acid or polyurethanes; antifoaming agents; catalysts for the crosslinking reaction of the OH-functional binders, for example, organic metal salts, such as, dibutyltin dilaurate, zinc naphthenate and compounds containing tertiary amino groups, such as, triethylamine, for the crosslinking reaction with polyisocyanates. The additives are used in conventional amounts familiar to those skilled in the art.

The coating compositions according to the disclosure can further contain reactive low molecular weight compounds as reactive diluents that are capable of reacting with the crosslinking agent. For example, low molecular weight polyhydroxyl compounds, such as, ethylene glycol, propylene glycol, trimethylolpropane and 1,6-dihydroxyhexane can be used.

Depending upon the type of crosslinking agent, the coating composition of this disclosure can be formulated as one-pack (1 K) or two-pack (2K) coating composition. If polyisocyanates with free isocyanate groups are used as the crosslinking agent, the coating composition can be formulated as a two-pack coating composition in that the crosslinking agent is mixed with other components of the coating composition only shortly before coating application. If blocked polyisocyanates are, for example, used as the crosslinking agent, the coating compositions can be formulated as a one-pack (1 K) coating composition. The coating composition can be further adjusted to spray viscosity with organic solvents before being applied as determined by those skilled in the art.

In a typical two-pack coating composition comprising two packages, the two packages are mixed together shortly before application. The first package typically can contain the acrylic polymer having reactive groups, such as, an acrylic polymer having reactive hydroxyl groups, and the polytrimethylene ether diol and pigments. The pigments can be dispersed in the first package using conventional dispersing techniques, for example, ball milling, sand milling, and attritor grinding. The second package can contain the crosslinking agent, such as, a polyisocyanate crosslinking agent, and solvents.

The coating composition according to the disclosure can be suitable for vehicle and industrial coating and can be applied using known processes. In the context of vehicle coating, the coating composition can be used both for vehicle original equipment manufacturing (OEM) coating and for repairing or refinishing coatings of vehicles and vehicle parts. Curing of the coating composition can be accomplished at ambient temperatures, such as temperatures in a range of from 18°C to 35°C, or at elevated temperatures, such as at temperatures in a range of from 35°C to 150°C. Typical curing temperatures of 20°C to 80°C, in particular of 20°C to 60°C, can be used for vehicle repair or refinish coatings.

The coating composition can be applied by conventional techniques, such as, spraying, electrostatic spraying, dipping, brushing, and flow coating. Typically, the coating is applied to a dry film thickness of 20 to 300 microns and preferably, 50 to 200 microns, and more preferably, 50 to 130 microns.

The use of polytrimethylene ether diol in coating compositions has been described in US Patent Nos. 6,875,514 and 7,169,475. However, both patents require the acrylic polymers having a Tg at or higher than 10°C. Such coatings with high Tg acrylic polymers provide high early hardness, such as 3 hour hardness that is especially useful for early sanding of the coatings in refinishing or repairing automotive vehicles or trucks. For other coating applications such as coating steel tanks, pipelines, or other industrial structures, early sanding may not be required while adhesion to different substrates and flexibility can be challenging. The inventors unexpectedly discovered that by combining acrylic polymers of low Tg, i.e., Tg below 10°C, in a range of from -40°C to +5°C, polytrimethylene ether diol and a crosslinking agent, coating layers produced from the coating composition of this disclosure can have improved adhesion to different substrates, especially to substrates having one or more existing coating layers. In addition, coating layers formed from the coating composition of this disclosure have improved flexibility.

The coating composition of this disclosure forms finishes with good adhesion to various substrates such as blasted steel and other coating layer or layers such as primer layers formed by common industrial primers.

### Testing Procedures

Dry Film Thickness - test method ASTM D4138

Viscosity - can be measured using (1) Zahn Viscosity as determined using a #1 Zahn cup according to ASTM D 1084 Method D; (2) Gardner-Holdt Letter scale according to ASTM D1545; or (3) Brookfield viscometer; as specified.

Persoz Hardness Test - the change in film hardness of the coating was measured with respect to time after application by using a Persoz Hardness Tester Model No. 5854 [ASTM D4366] supplied by Byk-Mallinckrodt, Wallingford, CT. The measurement is in second.

Tg (glass transition temperature) of a polymer is determined according to ASTM D-3418 (1988) or calculated according to the Fox Equation.

Molecular weight and hydroxyl number of the polytrimethylene ether diol are determined according to ASTM E222.

Molecular weights Mw and Mn and the polydispersity (Mw/Mn) of the acrylic polymer and other polymers are determined by GPC (Gel Permeation Chromatography) using polystyrene standards and tetrahydrofuran as the solvent.

Cross-Hatch Adhesion Test - The cross hatch tape test is primarily intended for use in the laboratory. A cross-hatch pattern is created using a special cross-hatch cutter with multiple preset blades can be used to make parallel incisions with proper space. After the tape has been applied and pulled off, the cut area is inspected and rated. The foregoing test is based on a standard method for the application and performance of these adhesion tests available in ASTM D3359 B. Adhesion can be rated on a sliding scale, which ranges from 0B (no adhesion, i.e., total failure) to 5B (complete adhesion, i.e., total success). A rating of 3B and higher is preferable and a rating of 9 and higher is more preferable. A device described in U. S. Patent Publication No. 2006/0042724, published on March 2, 2006, filed on June 16, 2005 with an application No. 11/154,487, can be used to create properly spaced and parallel incisions into the coating.

Dry to touch time - Dry to touch time is determined by ASTM D1640.

Flexibility of coatings - Flexibility test can be done using Mandrel Bending test of attached organic coatings as described in ASTM D522 A. Flexibility of the coating can be shown as percent elongation in a range of from 2% (not flexible) to 30% (flexible).

In the following examples, all parts and percentages are on a weight basis unless otherwise indicated. "Mw" weight average molecular weight and "Mn" means number average molecular weight.

### EXAMPLES

The present invention is further defined in the following Examples.

### Procedure 1: Preparation of Acrylic Polymers

Acrylic polymers were formed by free-radical copolymerization using conventional processes well known to those skilled in the art. The process is briefly described here. Charge to a reactor equipped with a stirrer, reflux condenser and under nitrogen 13.7 parts t-butylacetate. Heat to reflux, at approximately 96°C. Premix a monomer mixture of 8.8 parts methyl methacrylate, 5.9 parts styrene, 11.7 parts hydroxyethyl methacrylate, 20.5 parts n-butyl acrylate, 11.7 parts 2-ethylhexyl methacrylate, 1.2 parts t-butylacetate. Premix an initiator mixture of 3.4 parts Vazo® 67 (Vazo® 67 is available from E. I. DuPont de Nemours and Company, Wilmington, DE, USA, and under respective registered trademark) and 23.2 parts t-butylacetate. Feed monomer mixture over 390 minutes at reflux simultaneously with the initiator mixture. Feed initiator mixture over 400 minutes. After the initiator mixture feed was complete, held 30 minutes at reflux. Then cool to room temperature. The acrylic polymer resin produced had the following characteristics: monomer ratio 10 styrene/35 n-butyl acrylate (nba)/20 ethylhexyl methacrylate (ehma)/15 methyl methacrylate (mma)/20 hydroxyethyl methacrylate (hema), a calculated Tg of +2.2°C, 46.7 wt% solids, Gardner-Holdt viscosity B in Gardner-Holdt Letter scale according to ASTM D1545, and weight average molecular weight (Mw) of 9455.

### Procedure 2: Preparation of Pigments Dispersion

A red dispersion was prepared using the following procedure.

**Table 1. Pigments Dispersion**

| **Ingrdient** | **Wt (grams)** |
|---|---|
| t-butyl acetate | 72.7 |
| EFKA®-4340 dispersant⁽¹⁾ | 35.4 |
| Magnesium montmorillonite⁽²⁾ | 2.3 |
| Acrylic polymer from the Procedure 1 | 211.6 |
| Total | 321.8 |

| | |
|---|---|
| (1) Available from Ciba® Specialty Chemicals Inc, Tarrytown, New York, USA, under respective registered trademarks. (2) Available as Bentone® 27 from Elementis Specialties Inc., Hightstown, New Jersey, USA, under respective registered trademarks. | |

Ingredients in Table 1 were added in order to an attritor with mixing and mixed for approximately 5 minutes. The Quinacridone red pigment (Cinquasia red YRT-859-D by Ciba Specialty Chemicals) was slowly added and the mixture was mixed for another 5 minutes. The grinding media containing 1816 grams of 1/8" steel shots, was added. The mixture was milled for 5 hours at 350 rpm. The dispersion was separated from the grinding media. The pigment was well dispersed to give a uniform dispersion with a viscosity of 770 cps at 20 rpm as measured by a Brookfield viscometer.

### Coating Compositions

Coating compositions were prepared according to Table 2.

**Table 2. Coating Compositions (in gram).**

| | **Comparative 1** | **Comparative 2** | **Comparative 3** | **Example** |
|---|---|---|---|---|
| Low Tg Acrylic polymer ⁽¹⁾ | 58.6 | 48.6 | - | 47.9 |
| High Tg Acrylic polymer ⁽²⁾ | - | - | 51.4 | - |
| Pigments Dispersion⁽³⁾ | 27.5 | 22.9 | 22.9 | 22.5 |
| Polytrimethylene ether diols⁽⁴⁾ | - | - | 14.2 | 14.1 |
| PPG2000⁽⁵⁾ | - | 14.3 | - | - |
| Isocyanates crosslinkin agent (FG-1333)⁽⁶⁾ | 13.9 | 14.2 | 11.5 | 15.5 |
| Total | 100 | 100 | 100 | 100 |
| Solid percentage | 59.5% | 66.2% | 66.2% | 66.2% |
| NCO/OH Ratio | 1.05 | 1.04 | - | 1.05 |
| Pot life (minutes) | 30 | 45 | - | 30 |

| | | | | |
|---|---|---|---|---|
| (1) Low Tg Acrylic polymer was from Procedure 1. (2) High Tg acrylic polymer was Joncryl® 918 with a Tg of about +36°C, available from BASF Resins, Sturtevant, WI, USA. (3) Pigments dispersion was from Procedure 2. (4) Polytrimethylene ether diols were prepared according to the process described in U.S. Patent No. 6,875,514, col. 9, line 29 through col. 10, line 8. Characteristics of the polytrimethylene ether diols include: number average molecular weight (Mn) was about 1,300 - 1,450, hydroxyl number of 77.4 - 86.3 and a glass transition temperature (Tg) of about -75°C. (5) PPG2000: polypropylene glycol having a molecular weight of 2000 from Aldrich Chemical Company, Product No. 81380. (6) FG-1333 is a crosslinking activator comprising diisocyanates, available from E. I. DuPont de Nemours and Company, Wilmington, DE, USA. | | | | |

### Coating Properties

The coating compositions were applied by drawdown on two sets of substrates.

First set of substrates were steel plates that had been coated with epoxy mastic primer 25P^{™} (also sold as Corlar® 2.1-PR^{™}) available from E. I. DuPont de Nemours and Company, Wilmington, De, USA, under respective registered and unregistered trademarks. Each of the coating compositions was wet drawdown onto at least one substrate over the dried primer layer forming a dry coating layer at about 4 mil (about 100 micron) in thickness.

Second set of substrates were blasted steel plates available from East Coast Steel Inc, Columbia, SC 29290, USA. Each of the coating compositions was wet drawdown onto at least one substrate forming a dry coating layer at about 8 mil (about 200 micron) in thickness.

Dry time of the coating layers was measured according to ASTM D1640. Adhesion was measured using the aforementioned Cross-Hatch adhesion test. A score of 0B indicates total failure on adhesion. A score of 5B indicates perfect adhesion.

Coating property data are shown in Table 3. The data indicated that the Example of the coating composition of this disclosure had good adhesion to the epoxy primer layer and had a good dry to touch time. The comparative 1 failed to adhere to the epoxy primer layer. The comparative 2 had long dry to touch time making it of very low value for practical use. The comparative 2 also had lower adhesion to the epoxy primer layer. All coating compositions had good adhesion to blasted steel substrates.

Flexibility data indicated that the coating example of this disclosure is more flexible than the comparative examples.

**Table 3. Coating Properties.**

| | **Comparative 1** | **Comparative 2** | **Comparative 3** | **Example** |
|---|---|---|---|---|
| Dry to touch time (hours) | 1.5 | >48 | 3 | 4 |
| Adhesion to 25P Epoxy Primer Layer | 0B | 2B | 3B | 4B |
| Adhesion to blasted steel | 5B | 5B | 5B | 5B |
| Flexibility of the coatings⁽¹⁾ | 10% | 4% | 15% | 28% |
| 1 day Persoz hardness (second)⁽²⁾ | 22 | 5 | 50 | 17 |

| | | | | |
|---|---|---|---|---|
| (1) The flexibility test was done with 1 mil coating film using the Mandrel Bending test method. The values represent percent elongation. (2) For additional comparison, 1 day hardness of coatings having high Tg acrylics can be at about 86 second (Example 4L in the aforementioned U.S. Patent No. 6,875,514). | | | | |

## Claims

1. A coating composition comprising a film forming binder, said binder consisting essentially of:
A) an acrylic polymer having one or more crosslinkable functional groups and having a glass transition temperature (Tg) in a range of from -40°C to 5°C;
B) a polytrimethylene ether diol having a Mn (number average molecular weight) in a range of from 500 to 10,000; and
C) a crosslinking component containing at least one crosslinking agent having one or more crosslinking functional groups.

2. The coating composition of claim 1, wherein the polytrimethylene ether diol has a Mn in a range of from 500 to 4,000, a Tg of about -75°C and a hydroxyl number in a range of from 20 to 200.

3. The coating composition of claim 1, wherein the polytrimethylene ether diol is a blend of high and low molecular weight polytrimethylene ether diols wherein the high molecular weight polytrimethylene ether diol has an Mn in a range of from 1,000 to 4,000 and the low molecular weight polytrimethylene ether diol has an Mn in a range of from 150 to 500 and the average Mn of the blend is in a range of from 1,000 to 4,000.

4. The coating composition of claim 1, wherein the polytrimethylene ether diol is polymerized from bio-derived 1,3-propanediol.

5. The coating composition of claim 1, wherein at least one of said one or more crosslinkable functional groups is hydroxyl group, and wherein at least one of said one or more crosslinking functional groups is isocyanate group.

6. The coating composition of claim 1, wherein the binder consists essentially of:
(a) in a range of from 10% to 80 % by weight, based on the weight of the binder, of the acrylic polymer;
(b) in a range of from 1 % to 50% by weight, based on the weight of the binder, of the polytrimethylene ether diol; and
(c) in a range of from 10% to 50% by weight, based on the weight of the binder, of the crosslinking component; and
wherein the sum of the percentages of (a), (b) and (c) is 100%.

7. The coating composition of claim 1, wherein the acrylic polymer has a weight average molecular weight of 1,000 to 100,000 and a Tg of -40°C to 5°C and is polymerized from monomers consisting of:
i) non-functional monomers selected from the group consisting of linear alkyl (meth)acrylates having 1-12 carbon atoms in the alkyl group, cyclic or branched alkyl (meth)acrylates having 3 to 12 carbon atoms in the alkyl group, isobornyl (meth)acrylate, alpha methyl styrene, (meth)acrylonitrile, (meth)acryl amides, and a combination thereof; and
ii) functional monomers selected from the group consisting of hydroxy alkyl (meth)acrylates having 1 to 4 carbon atoms in the alkyl group, glycidyl (meth)acrylates, hydroxy amino alkyl(meth)acrylates having 1 to 4 carbon atoms in the alkyl group, alkoxy silyl alkyl (meth)acrylate and (meth)acrylic acid, and a combination thereof.

8. The coating composition of claim 1, wherein the acrylic polymer is polymerized from monomers selected from the group consisting of:
styrene, n-butyl acrylate, ethyl methacrylate, methyl methacrylate, butyl acrylate, 2-ethylhexyl acrylate, ethyl acrylate, isobutyl acrylate, 2-ethylhexyl methacrylate, 2-hydroxyethyl acrylate, hydroxypropyl acylate, and a combination thereof.

9. The coating composition of claim 1, wherein the acrylic polymer is polymerized from monomers selected from the group consisting of styrene, ethylhexyl methacrylate, n-butyl acrylate, ethyl methacrylate, methyl methacrylate and hydroxyethyl methacrylate.

10. The coating composition of claim 1, wherein the crosslinking agent is selected from the group consisting of aliphatic polyisocyanates, cycloaliphatic polyisocyanates, aromatic polyisocyanates, trifunctional isocyanates, isocyanate adducts and a combination thereof.

11. The coating composition of claim 1, wherein said crosslinking agent is selected from the group consisting of isophorone diisocyanate, toluene diisocyanate, hexamethylene diisocyanate, diphenylmethane diisocyanate, triphenyl triisocyanate, benzene triisocyanate, toluene triisocyanate, the trimer of hexamethylene diisocyanate, and a combination thereof.

12. The coating composition of claim 1 further comprising one or more pigments.

13. A process for coating a substrate having at least one existing coating layer thereon, said process comprising the steps of:
(A) applying a coating composition over said existing coating layer to form an overlay coating layer, wherein said coating composition comprises a film forming binder consisting essentially of:
(i) an acrylic polymer having one or more crosslinkable functional groups and having a glass transition temperature (Tg) of in a range of from -40°C to 5°C;
(ii) a polytrimethylene ether diol having a Mn (number average molecular weight) in a range of from 500 to 10,000; and
(iii) a crosslinking component containing at least one crosslinking agent having one or more crosslinking functional groups; and
(B) curing said overlay coating layer to form an overlay coating on said substrate.

14. The process of claim 13, wherein at least one of said one or more crosslinkable functional groups is hydroxyl groups, and wherein at least one of said one or more crosslinking functional groups is isocyanate group.

15. The process of claim 13, wherein said existing coating layer is an epoxy primer layer.

## Patentansprüche

1. Beschichtungszusammensetzung, umfassend ein filmbildendes Bindemittel, wobei das Bindemittel im Wesentlichen besteht aus:
A) einem Acrylpolymer mit einer oder mehr vernetzbaren funktionellen Gruppe(n) und mit einer Glasübergangstemperatur (Tg) in einem Bereich von -40 °C bis 5°C;
B) einem Polytrimethylenetherdiol mit einem Mn (Zahlenmittel des Molekulargewichts) in einem Bereich von 500 bis 10000; und
C) einer Vernetzungskomponente mit mindestens einem Vernetzungsmittel mit einer oder mehr vernetzenden funktionellen Gruppe(n).

2. Beschichtungszusammensetzung nach Anspruch 1, worin das Polytrimethylenetherdiol ein Mn in einem Bereich von 500 bis 4000, eine Tg von ca. -75 °C und eine Hydroxylzahl in einem Bereich von 20 bis 200 aufweist.

3. Beschichtungszusammensetzung nach Anspruch 1, worin das Polytrimethylenetherdiol eine Mischung aus Polytrimethylenetherdiolen mit hohem und niedrigem Molekulargewicht ist, worin das Polytrimethylenetherdiol mit hohem Molekulargewicht ein Mn in einem Bereich von 1000 bis 4000 aufweist und das Polytrimethylenetherdiol mit niedrigem Molekulargewicht ein Mn in einem Bereich von 150 bis 500 aufweist und das durchschnittliche Mn der Mischung in einem Bereich von 1000 bis 4000 liegt.

4. Beschichtungszusammensetzung nach Anspruch 1, worin das Polytrimethylenetherdiol aus biologisch abgeleitetem 1,3-Propandiol polymerisiert wird.

5. Beschichtungszusammensetzung nach Anspruch 1, worin mindestens eine von der einen oder mehr vernetzbaren funktionellen Gruppe(n) eine Hydroxylgruppe ist, und worin mindestens eine von der einen oder mehr vernetzenden funktionellen Gruppe(n) eine Isocyanatgruppe ist.

6. Beschichtungszusammensetzung nach Anspruch 1, worin das Bindemittel im Wesentlichen besteht aus:
(a) dem Acrylpolymer, in einem Bereich von 10 bis 80 Gew.-%, bezogen auf das Gewicht des Bindemittels;
(b) dem Polytrimethylenetherdiol, in einem Bereich von 1 bis 50 Gew.-%, bezogen auf das Gewicht des Bindemittels; und
(c) der Vernetzungskomponente, in einem Bereich von 10 bis 50 Gew.-%, bezogen auf das Gewicht des Bindemittels; und
worin die Summe der Prozentanteile von (a), (b) und (c) 100 % beträgt.

7. Beschichtungszusammensetzung nach Anspruch 1, worin das Acrylpolymer ein Zahlenmittel des Molekulargewichts von 1000 bis 100000 und eine Tg von -40 °C bis 5 °C aufweist und aus Monomeren polymerisiert wird, bestehend aus:
i) nicht funktionellen Monomeren, die aus der Gruppe ausgewählt sind, bestehend aus linearen Alkyl(meth)acrylaten mit 1 bis 12 Kohlenstoffatom(en) in der Alkylgruppe, cyclischen oder verzweigten Alkyl(meth)acrylaten mit 3 bis 12 Kohlenstoffatomen in der Alkylgruppe, Isobomyl(meth)acrylat, α-Methylstyrol, (Meth)acrylnitril, (Meth)acrylamiden und einer Kombination davon; und
ii) funktionellen Monomeren, die aus der Gruppe ausgewählt sind, bestehend aus Hydroxyalkyl(meth)acrylaten mit 1 bis 4 Kohlenstoffatom(en) in der Alkylgruppe, Glycidyl(meth)acrylaten, Hydroxyaminoalkyl(meth)acrylaten mit 1 bis 4 Kohlenstoffatom(en) in der Alkylgruppe, Alkoxysilylalkyl(meth)acrylat und (Meth)acrylsäure und einer Kombination davon.

8. Beschichtungszusammensetzung nach Anspruch 1, worin das Acrylpolymer aus Monomeren polymerisiert wird, die aus der Gruppe ausgewählt sind, bestehend aus: Styrol, n-Butylacrylat, Ethylmethacrylat, Methylmethacrylat, Butylacrylat, 2-Ethylhexylacrylat, Ethylacrylat, Isobutylacrylat, 2-Ethylhexylmethacrylat, 2-Hydroxyethylacrylat, Hydroxypropylacrylat und einer Kombination davon.

9. Beschichtungszusammensetzung nach Anspruch 1, worin das Acrylpolymer aus Monomeren polymerisiert wird, die aus der Gruppe ausgewählt sind, bestehend aus Styrol, Ethylhexylmethacrylat, n-Butylacrylat, Ethylmethacrylat, Methylmethacrylat und Hydroxyethylmethacrylat.

10. Beschichtungszusammensetzung nach Anspruch 1, worin das Vernetzungsmittel aus der Gruppe ausgewählt ist, bestehend aus aliphatischen Polyisocyanaten, cycloaliphatischen Polyisocyanaten, aromatischen Polyisocyanaten, trifunktionellen Isocyanaten, Isocyanataddukten und einer Kombination davon.

11. Beschichtungszusammensetzung nach Anspruch 1, worin das Vernetzungsmittel aus der Gruppe ausgewählt ist, bestehend aus Isophorondiisocyanat, Toluendiisocyanat, Hexamethylendiisocyanat, Diphenylmethandiisocyanat, Triphenyltriisocyanat, Benzentriisocyanat, Toluentriisocyanat, dem Trimer von Hexamethylendiisocyanat und einer Kombination davon.

12. Beschichtungszusammensetzung nach Anspruch 1, ferner umfassend ein oder mehr Pigment(e).

13. Verfahren zur Beschichtung eines Substrats mit mindestens einer existierenden Beschichtungsschicht darauf, wobei das Verfahren die folgenden Schritte umfasst:
(A) Auftragen einer Beschichtungszusammensetzung über die existierende Beschichtungsschicht zur Bildung einer Deckbeschichtungsschicht, worin die Beschichtungszusammensetzung ein filmbildendes Bindemittel umfasst, bestehend im Wesentlichen aus:
(i) einem Acrylpolymer mit einer oder mehr vernetzbaren funktionellen Gruppe(n) und mit einer Glasübergangstemperatur (Tg) in einem Bereich von -40 °C bis 5 °C;
(ii) einem Polytrimethylenetherdiol mit einem Mn (Zahlenmittel des Molekulargewichts) in einem Bereich von 500 bis 10000; und
(iii) einer Vernetzungskomponente mit mindestens einem Vernetzungsmittel mit einer oder mehr vernetzenden funktionellen Gruppe(n); und
(B) Härten der Deckbeschichtungsschicht zur Bildung einer Deckbeschichtung auf dem Substrat.

14. Verfahren nach Anspruch 13, worin mindestens eine von der einen oder mehr vernetzbaren funktionellen Gruppe(n) eine Hydroxylgruppe ist, und worin mindestens eine von der einen oder mehr vernetzenden funktionellen Gruppe(n) eine Isocyanatgruppe ist.

15. Verfahren nach Anspruch 13, worin die existierende Beschichtungsschicht eine Epoxidgrundierungsschicht ist.

## Revendications

1. Composition de revêtement comprenant un liant formant un film, ledit liant étant constitué essentiellement:
A) d'un polymère acrylique possédant un ou plusieurs groupes fonctionnels réticulables et possédant une température de transition vitreuse (Tg) dans un intervalle de -40°C à 5°C;
B) d'un diol d'éther de polytriméthylène possédant un Mn (poids moléculaire moyen en nombre) dans un intervalle de 500 à 10000; et
C) d'un composant de réticulation contenant au moins un agent de réticulation possédant un ou plusieurs groupes fonctionnels réticulables.

2. Composition de revêtement selon la revendication 1, dans laquelle le diol d'éther de polytriméthylène possède un Mn de 500 à 4000, une Tg d'environ -75°C et un indice hydroxyle dans un intervalle de 20 à 200.

3. Composition de revêtement selon la revendication 1, dans laquelle le diol d'éther de polytriméthylène est un mélange de diols d'éther de polytriméthylène à poids moléculaires élevé et bas, dans laquelle le diol d'éther de polytriméthylène à poids moléculaire élevé possède un Mn dans un intervalle de 1000 à 4000 et le diol d'éther de polytriméthylène à poids moléculaire bas possède un Mn dans un intervalle de 150 à 500 et le Mn moyen du mélange est dans un intervalle de 1000 à 4000.

4. Composition de revêtement selon la revendication 1, dans laquelle le diol d'éther de polytriméthylène est polymérisé à partir d'un 1,3-propanediol bio-dérivé.

5. Composition de revêtement selon la revendication 1, dans laquelle au moins un desdits un ou plusieurs groupes fonctionnels réticulables est un groupe hydroxyle et dans laquelle au moins un desdits un ou plusieurs groupes fonctionnels réticulables est un groupe isocyanate.

6. Composition de revêtement selon la revendication 1, dans laquelle le liant est constitué essentiellement:
(a) dans un intervalle de 10% à 80% en poids, sur la base du poids du liant, du polymère acrylique;
(b) dans un intervalle de 1% à 50% en poids, sur la base du poids du liant, du diol d'éther de polytriméthylène; et
(c) dans un intervalle de 10% à 50% en poids, sur la base du poids du liant, du composant de réticulation; et
dans laquelle la somme des pourcentages de (a), (b) et (c) est 100%.

7. Composition de revêtement selon la revendication 1, dans laquelle le polymère acrylique possède un poids moléculaire moyen en poids de 1000 à 100000 et une Tg de - 40°C à 5°C et où il est polymérisé à partir de monomères constitués:
i) de monomères non fonctionnels choisis dans le groupe constitué de (méth)acrylates d'alkyle linéaires possédant 1-12 atomes de carbone dans le groupe alkyle, de (méth)acrylates d'alkyle cycliques ou ramifiés possédant de 3 à 12 atomes de carbone dans le groupe alkyle, de (méth)acrylate d'isobomyle, d'alpha-méthylstyrène, de (méth)acrylonitrile, de (méth)acrylamides et d'une combinaison de ceux-ci; et
ii) de monomères fonctionnels choisis dans le groupe constitué de (méth)acrylates d'hydroxyalkyle possédant de 1 à 4 atomes de carbone dans le groupe alkyle, de (méth)acrylates de glycidyle, de (méth)acrylates d'hydroxyaminoalkyle possédant de 1 à 4 atomes de carbone dans le groupe alkyle, de (méth)acrylate d'alcoxysilylalkyle et d'acide (méth)acrylique et d'une combinaison de ceux-ci.

8. Composition de revêtement selon la revendication 1, dans laquelle le polymère acrylique est polymérisé à partir de monomères choisis dans le groupe constitué de: styrène, acrylate de n-butyle, méthacrylate d'éthyle, méthacrylate de méthyle, acrylate de butyle, 2-éthylhexylacrylate, acrylate d'éthyle, acrylate d'isobutyle, 2-éthylhexylméthacrylate, 2-hydroxyéthylacrylate, acrylate d'hydroxypropyle et une combinaison de ceux-ci.

9. Composition de revêtement selon la revendication 1, dans laquelle le polymère acrylique est polymérisé à partir de monomères choisis dans le groupe constitué de styrène, de méthacrylate d'éthylhexyle, d'acrylate de n-butyle, de méthacrylate d'éthyle, de méthacrylate de méthyle et de méthacrylate d'hydroxyéthyle.

10. Composition de revêtement selon la revendication 1, dans laquelle l'agent de réticulation est choisi dans le groupe constitué de polyisocyanates aliphatiques, de polyisocyanates cycloaliphatiques, de polyisocyanates aromatiques, d'isocyanates trifonctionnels, d'adduits d'isocyanate et d'une combinaison de ceux-ci.

11. Composition de revêtement selon la revendication 1, dans laquelle ledit agent de réticulation est choisi dans le groupe constitué d'isophorone diisocyanate, de toluène diisocyanate, d'hexaméthylène diisocyanate, de diphénylméthane diisocyanate, de triphényltriisocyanate, de benzène triisocyanate, de toluène triisocyanate, du trimère d'hexaméthylène diisocyanate et d'une combinaison de ceux-ci.

12. Composition de revêtement selon la revendication 1 comprenant en outre un ou plusieurs pigments.

13. Procédé pour le revêtement d'un substrat possédant au moins une couche de revêtement existante sur celui-ci, ledit procédé comprenant les étapes:
(A) d'application d'une composition de revêtement au-dessus de ladite couche de revêtement existante pour former une couche de revêtement couvrante, dans lequel ladite composition de revêtement comprend un liant formant un film constitué essentiellement:
(i) d'un polymère acrylique possédant un ou plusieurs groupes fonctionnels réticulables et possédant une température de transition vitreuse (Tg) dans un intervalle de -40°C à 5°C;
(ii) d'un diol d'éther de polytriméthylène possédant un Mn (poids moléculaire moyen en nombre) dans un intervalle de 500 à 10000; et
(iii) d'un composant de réticulation contenant au moins un agent de réticulation possédant un ou plusieurs groupes fonctionnels réticulables; et
(B) de durcissement de ladite couche de revêtement couvrante pour former un revêtement couvrant sur ledit substrat.

14. Procédé selon la revendication 13, dans lequel au moins un desdits un ou plusieurs groupes fonctionnels réticulables est un groupe hydroxyle et dans lequel au moins un desdits un ou plusieurs groupes fonctionnels réticulables est un groupe isocyanate.

15. Procédé selon la revendication 13, dans lequel ladite couche de revêtement existante est une couche de fond époxy.
